# EUROPÄISCHE PATENTSCHRIFT

(11) **EP 1 036 888 B1**
(45) Veröffentlichungstag und Bekanntmachung des Hinweises auf die Patenterteilung: **21.11.2007**
(21) Anmeldenummer: 00105646.4
(22) Anmeldetag: 16.03.2000
(51) Int. Cl.: E03B 1/04, E03D 5/00

(54) **Anlage und Verfahren zur Wiederverwertung von Grauwasser**
Installation and method for recycling greywater
Installation et procédé de recyclage des eaux grises

(30) Priorität: 18.03.1999 DE 19912103
(43) Veröffentlichungstag der Anmeldung: 20.09.2000
(73) Patentinhaber: Hansgrohe AG, 77761 Schiltach (DE)
(72) Erfinder: Heinzelmann, Werner, 72275 Alpirsbach (DE)
(74) Vertreter: Patentanwälte Ruff, Wilhelm, Beier, Dauster & Partner

(56) Entgegenhaltungen:
- EP-A- 0 255 863
- WO-A-95/30041
- DE-A- 4 004 057
- DE-U- 8 504 863
- DE-U- 9 420 927

## Beschreibung

Die üblichen Installationen zur Wiederverwendung von bereits einmal benutztem Wasser, sog. Grauwasser, arbeiten in der Regel so, dass sie das aus einer Quelle stammende Wasser aufnehmen, reinigen und lagern. Das Wasser wird dann für einen anderen Zweck wieder verwendet. Der typische Anwendungsfall ist die Verwendung von Bade- oder Duschwasser für eine Toilettenspülung. Es wurde auch schon vorgeschlagen, den Auslass aus einer Waschmaschine mit als Eingang für eine Grauwasseranlage zu verwenden. Dies hat sich jedoch in der Praxis nicht bewährt. Das aus der Waschmaschine stammende Wasser kann hohe Temperatur aufweisen, stark verschmutzt sein und auch aufgrund der Lauge aggressiv sein.

Es ist bereits eine Vorrichtung zum Trennen des Waschmaschinenabwassers nach dem Verschmutzungsgrad bekannt (DE-U1-85 04 863.1). Hierbei wird das Abwasser einer Waschmaschine, sofern es kalt genug ist, in einen Sammeltank geleitet, aus dem es dann bei Bedarf entnommen und für eine Toilettenspülung verwendet werden kann. Mit diesem Tank sind auch andere Brauchwassererzeuger verbunden.

Weiterhin bekannt ist eine Waschmaschine, die einen Behälter zur Aufnahme von aus dieser Waschmaschine stammendem bereits benutzten Wasser aufweist (WO 95/30041).

Eine ähnliche Einrichtung ist ebenfalls aus DE-A1-40 04 057 bekannt.

Der Erfindung liegt die Aufgabe zugrunde, den Verbrauch an Trinkwasser weiter zu verringern.

Zur Lösung dieser Aufgabe wird eine Anlage mit den Merkmalen des Anspruchs 1 sowie ein Verfahren mit den im Anspruch 2 angegebenen Merkmalen vorgeschlagen. Weiterbildungen sind Gegenstand der abhängigen Ansprüche, deren Wortlaut durch Bezugnahme zum Inhalt der Beschreibung gemacht wird.

Es hat sich herausgestellt, dass zumindest für den ersten Waschgang oder sogar für alle Waschgänge einer Waschmaschine Brauchwasser aus einer Grauwasseranlage verwendet werden kann. Dieses Brauchwasser kann von einem Tank zur Verfügung gestellt werden. Es hat sich aber weiterhin herausgestellt, dass das Spülwasser aus den Spülgängen, insbesondere aus dem letzten Spülgang so sauber ist, dass es wieder verwendet werden kann, sich also als Speisung für einen Grauwassertank eignet. Es wird eine Anlage vorgeschlagen, bei der gebrauchtes Wasser aus einer Einrichtung wieder verwendet wird, und das gereinigte Wasser für die gleiche Einrichtung nochmals verwendet wird.

Da zumindest für das letzte Spülen aber aus der Hausinstallation stammendes Wasser in Trinkwasserqualität verwendet wird, wird vorgeschlagen in der von der Trinkwasserleitung zu der Waschmaschine führenden Leitung eine Umschalteinrichtung einzusetzen, deren zweiter Anschluss mit der von dem Tank kommenden Leitung verbunden wird. Dies bedeutet, dass an der Waschmaschine keine zweiter Anschluss für die Einspeisung von Wasser vorhanden sein muss. Falls allerdings eine Waschmaschine zwei Anschlüsse aufweist, die ggf. getrennt eingeschaltet werden können, kann eine solcher Anschluss hier auch verwendet werden.

In gleicher Weise ist auch vorgesehen, dass im Abgang von der Waschmaschine zu der Kanalisation, insbesondere einer zu dieser führenden Leitung, ein Umschaltventil realisiert wird, dessen zweiter Ausgang über eine Leitung zu dem Grauwassertank führt.

Die Anlage weist eine Steuereinrichtung auf, die das Spülwasser mindestens aus dem letzten Spülgang der Waschmaschine in den Tank leitet.

Es kann ebenfalls vorgesehen sein, dass eine Steuereinrichtung das Wasser mindestens für die ersten Waschgänge aus dem Tank in die Waschmaschine leitet. Beide Steuereinrichtungen können getrennte Steuereinrichtungen sein, und beide Steuereinrichtungen können manuell auslösbar sein. Dies bedeutet also z.B., dass ein Benutzer, der die Waschmaschine für den Vorwaschgang einschaltet, auf einen Knopf drückt, um Brauchwasser aus dem Tank in die Waschmaschine zu leiten.

Für den Benutzer ist es natürlich einfacher, wenn, wie von der Erfindung ebenfalls vorgeschlagen wird, die Steuereinrichtung von der Steuerung der Waschmaschine ausgelöst werden kann. Die Steuerung der Waschmaschine weiß natürlich zu jedem Zeitpunkt, welcher Vorgang gerade abläuft, und ob es sich um einen ersten oder letzten Waschgang oder um einen ersten oder letzen Spülgang handelt. Diese Möglichkeit erfordert allerdings einen Eingriff in die Waschmaschine.

Daher kann in Weiterbildung auch vorgesehen sein, dass die Steuereinrichtung, zum Umschalten, von einer Steuerlogik der Anlage angesteuert wird. Diese Steuerlogik kann aus verschiedenen Vorgängen eine Unterscheidung treffen, ob gerade ein Waschgang oder ein Spülgang vorliegt. Da mindestens der letzte Spülgang in der Regel mit Leitungswasser erfolgen soll, kann die Steuerlogik im Zweifel sich immer dafür entscheiden, Trinkwasser in die Waschmaschine einzuspeisen, falls die Situation unklar ist oder kein Brauchwasser zur Verfügung steht.

Beispielsweise ist die Anlage mit einem Temperatursensor verbunden, der in der von der Waschmaschine zu der Kanalisation führenden Leitung angeordnet ist. Wenn das aus der Waschmaschine herausgepumpte Wasser warm ist, so wird gerade ein Waschgang beendet. Dies bedeutet für die Anlage , dass dieses Wasser, das stärker verschmutzt ist, nicht in den Grauwassertank geleitet wird.

Ebenfalls möglich ist es, wenn die Anlage mit einem Temperatursensor verbunden wird, der an oder in der Waschmaschine angeordnet ist. Das Anbringen eines Temperatursensors beispielsweise an der Rückwand oder dem Auslauf aus einer Waschmaschine bedeutet noch keinen Eingriff in die Waschmaschine und kann auch nachträglich durchgeführt werden. Hier kann die Steuerlogik schon während des Ablaufens eines Waschvorgangs erkennen, dass ein Waschgang vorliegt, und dann auf die Versorgung mit Grauwasser umschalten.

Eine weitere Möglichkeit zur Erkennung verschiedener Vorgänge besteht darin, dass die Anlage ein Messgerät für den augenblicklichen Stromverbrauch aufweist. Übliche Waschmaschinen haben drei elektrische Verbraucher unterschiedlichen Stromverbrauchs, nämlich die Laugenpumpe, den Motor zum Antrieb der Trommel und die Heizung. Von diesen drei Verbrauchern ist die Heizung der größte Verbraucher, so dass die Steuerung anhand des Stromverbrauchs erkennen kann, dass ein Waschgang vorliegt, bei dem geheizt wird. Dieses Abwasser wird dann in die Kanalisation geleitet.

Eine weitere Möglichkeit zur Erkennung von Vorgängen wird durch ein Messgerät für die Menge des Wassers geschaffen, das aus dem Tank in die Waschmaschine gepumpt wird, oder auch durch ein Messgerät für die Menge des aus der Waschmaschine herausgepumpten Wassers. Wenn die für einen Waschgang benötigte Wassermenge aus dem Tank wieder aus der Waschmaschine herausgelangt ist, so ist dies ein Anzeichen dafür, dass dieser Waschgang beendet ist.

Ebenfalls möglich ist die Messung der Trübung des aus der Waschmaschine ausgepumpten Wassers.

Es wird vorgeschlagen, dass die beiden Vorgänge, nämlich das Einleiten von Brauchwasser in die Waschmaschine und das Einleiten von die Waschmaschine verlassenden Wassers in den Grauwassertank unabhängig voneinander erfolgen. Daher können auch Erkennungsmöglichkeiten für die beiden Vorgänge getrennt voneinander verwendet werden. In Zweifel wird kein Brauchwasser in die Waschmaschine geleitet, und kein Wasser aus der Waschmaschine in den Grauwassertank.

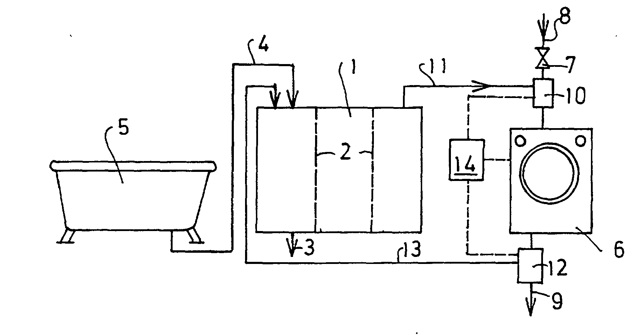

Weitere Merkmale, Einzelheiten und Vorzüge ergeben sich aus der folgenden Beschreibung einer bevorzugten Ausführungsform sowie anhand der Zeichnung. Hierbei zeigt die einzige Zeichnungsfigur eine schematische Anordnung einer Anlage. Die Anlage enthält einen Tank (1), in dem Grauwasser gespeichert, gefiltert und gereinigt wird. Der Tank kann mehrere durch Trennwände (2) getrennte Abteile aufweisen, zwischen denen jeweils Verbindungen bestehen. Zum Ablassen von Schmutz ist ein Ablauf (3) vorhanden.

Der Tank (1) ist über eine Leitung (4) mit dem Auslass einer Badewanne (5) verbunden. Dies ist der typische Anwendungsfall, bei dem also das aus der Badewanne (5) stammende leicht verschmutzte Wasser in den Tank (1) geleitet wird.

Es wird vorgeschlagen, den Tank (1) auch mit einer Waschmaschine (6) zu verbinden. Die Waschmaschine (6) wird über eine Leitung (8) mit einer Leitungswasserversorgung verbunden, in der ein Ventil (7) sitzt.

Der Auslass aus der Waschmaschine (6) führt zur Kanalisation mit Hilfe einer Leitung (9).

In die Leitung (8) von der Hausinstallation zu der Waschmaschine (6) wird ein Umschaltventil (10) eingesetzt, das zwei Eingänge aufweist, nämlich einen Eingang, der mit der Trinkwasserversorgung verbunden ist, und einen zweiten Eingang, der mit einer von dem Tank (1) kommenden Leitung (11) verbunden ist.

In die von der Waschmaschine (6) zu der Kanalisation führende Leitung (9) ist ebenfalls ein Umschaltventil (12) eingesetzt, das zwei Ausgänge aufweist. Ein Ausgang führt zu der Kanalisation, während der andere Ausgang über eine Leitung (13) in den Eingang des Tanks (1) führt.

Weitere Einzelheiten sind nicht dargestellt, beispielsweise Pumpen und Rückschlagventile in den verschiedenen Leitungen.

Die beiden Umschaltventile (10), (12) können von einer Steuereinrichtung (14) angesteuert werden, die mit einer Steuerlogik versehen sein kann.

Die vorgeschlagene Anlage arbeitet folgendermaßen. Das aus einem Spülgang der Waschmaschine (6) stammende Wasser, das in der Regel mindestens beim letzten Spülgang nur geringfügig verschmutzt ist, wird durch Betätigen des Umschaltventils (12) in den Tank (1) geleitet. Es kann dort zur Wiederverwertung gespeichert werden. Es wird wie übliches aus der Badewanne (5) stammendes Brauchwasser behandelt. Es kann beispielsweise zur Toilettenspülung verwendet werden.

Unabhängig davon kann für einen Waschgang der Waschmaschine (6) anstelle des Trinkwassers das aus dem Tank (1) stammende Brauchwasser verwendet werden. Hierzu wird das Umschaltventil (10) derart eingestellt, dass eine Leitungsverbindung zwischen der Leitung (11) und der Waschmaschine (6) besteht.

Zum Erkennung, ob gerade ein Waschgang oder ein Spülgang abläuft, können verschiedene Sensoren verwendet werden, beispielsweise ein Temperatursensor, der die Temperatur der Waschmaschine (6) oder auch die Temperatur des die Waschmaschine (6) verlassenden Wassers misst. Dieser Temperaturfühler kann beispielsweise in dem Gehäuse des Umschaltventils (12) angeordnet werden. Dort kann auch ein Trübungsmesser untergebracht werden, der die Trübung des die Waschmaschine (6) verlassenden Wassers misst.

Ebenfalls möglich ist es, dass die Menge des durch die Leitung (11) und/oder des durch die Leitung (8) vor dem Umschaltventil (10) und/oder die Menge des die Waschmaschine (6) verlassenden Wassers gemessen wird.

Eine weitere Bestimmungsmöglichkeit ist dadurch gegebenen, dass die Steuereinrichtung (14) den Stromverbrauch der Waschmaschine (6) misst.

Durch Kombination der verschiedenen Erkennungsmöglichkeiten und eine entsprechende Logik kann die Anlage ggf. ohne Eingriff in die Steuerung der Waschmaschine (6) arbeiten.

Die Steuereinrichtung (14) mit der Steuerlogik kann der Steuerung des Tanks (1) zugeordnet sein. Wenn die entsprechenden Sensoren nicht in die Waschmaschine integriert werden müssen, kann die Anlage und das Verfahren nachgerüstete Waschmaschinen umfassen.

Besonders vorteilhaft ist es, wenn neue Waschmaschinen mit mehreren Eingängen und Ausgängen versehen werden. Es sind schon Waschmaschinen mit 2 Eingängen bekannt, von denen einer an eine Kaltwasserleitung und einer an eine Warmwasserleitung angeschlossen wird. Waschmaschinen mit unterschiedlichen Ausgängen sind aber noch nicht bekannt.

## Patentansprüche

1. Anlage zur Wiederverwertung von Grauwasser mit
einem Tank (1) zur Speicherung und Reinigung von Grauwasser,
einem mit einer Grauwasserquelle verbindbaren Einlass in den Tank (1) zum Einführen von bereits benutztem Wasser,
einem Auslass aus dem Tank (1) zur Wiederverwertung des Wassers aus dem Tank (1), wobei
der Einlass in den Tank (1) über eine eine herstellbare Verbindung aufweisende Leitung (13) mit dem Auslass aus einer Waschmaschine (6) verbindbar ist und
der Auslass aus dem Tank (1) mit dem Einlass in die Waschmaschine über eine herstellbare Leitungsverbindung verbindbar ist, mit einem ersten Umschaltventil (10), das in der von der Trinkwasserversorgung zu der Waschmaschine (6) führenden Leitung (8) anzuordnen ist,
mit einem zweiten Umschaltventil (12), das in der von der Waschmaschine (6) zu der Kanalisation führenden Leitung (9) anzuordnen ist,
mit einem Temperatursensor, der in der von der Waschmaschine (6) zu der Kanalisation führenden Leitung (9) und/oder an/in der Waschmaschine (6) anzuordnen ist,
mit einem Trübungssensor für das aus der Waschmaschine (6) herausgepumpte Wasser und/oder
mit einem Messgerät für den augenblicklichen Stromverbrauch und/oder
mit einer Mengenmesseinrichtung für das von dem Tank (1) in die Waschmaschine (6) gepumpte Wasser und/oder mit einer Mengenmesseinrichtung für das aus der Waschmaschine (6) herausgepumpte Wasser,
sowie mit einer Steuereinrichtung (14), die das Spülwasser mindestens aus dem letzten Spülgang der Waschmaschine (6) in den Tank (1) leitet und/oder das Wasser mindestens für den ersten Waschgang aus dem Tank (1) in die Waschmaschine (6) leitet und die manuell und/oder von der Steuerung der Waschmaschine (6) auslösbar und/oder von einer einer Steuerung des Tanks (1) zugeordneten Steuerlogik ansteuerbar ist.

2. Verfahren zur Wiederverwertung von Grauwasser, bei dem
bereits in einer Grauwasserquelle benutztes Wasser in einen Tank (1) geleitet,
zusätzlich aus dem Spülgang einer Waschmaschine (6) stammendes Grauwasser in den Tank (1) geleitet und
das Wasser in dem Tank (1) gereinigt und gespeichert wird, und bei dem
für einen Waschgang der Waschmaschine (6) benötigtes Wasser dem Tank (1) als Brauchwasser entnommen wird.

3. Verfahren nach Anspruch 2, bei dem das aus einem Waschgang stammende Wasser der Kanalisation zugeleitet und das für einen Spülgang benötigte Wasser der Trinkwasserversorgung entnommen wird.

4. Verfahren nach Anspruch 2 oder 3, bei dem zur Unterscheidung von Spülgang und Waschgang der augenblickliche Stromverbrauch der Waschmaschine (6) gemessen wird.

5. Verfahren nach einem der Ansprüche 2 bis 4, bei dem zur Erkennung des Endes eines Waschgangs die Menge des aus dem Tank (1) in die Waschmaschine (6) gepumpten und die Menge des aus der Waschmaschine (6) herausgepumpten Wassers gemessen und verglichen werden und/oder bei dem zur Erkennung des Endes eines Spülgangs die Menge des aus der Trinkwasserversorgung in die Waschmaschine (6) geleiteten Wassers und die Menge des aus der Waschmaschine herausgepumpten Wassers gemessen und verglichen werden.

6. Verfahren nach einem der Ansprüche 2 bis 5, bei dem zur Erkennung eines Waschgangs die Temperatur des Wassers gemessen und/oder die Trübung des die Waschmaschine (6) verlassenden Wassers gemessen wird.

7. Verfahren nach einem der Ansprüche 2 bis 6, bei dem das Einleiten von Brauchwasser aus dem Tank (1) in die Waschmaschine (6) und das Einleiten von Grauwasser aus der Waschmaschine (6) in den Tank (1) unabhängig voneinander erfolgen.

8. Verfahren nach einem der Ansprüche 2 bis 7, bei dem die Steuerung der verschiedenen Ein- und Ausgänge der Waschmaschine (6) in die Steuerung des Tanks (1) und/oder in die Steuerung der Waschmaschine (6) integriert ist.

9. Verfahren nach einem der Ansprüche 2 bis 8, bei der Umschaltventile (10, 12) vor und/oder nach der Waschmaschine (6) angeordnet werden.

## Claims

1. A system for reusing grey water, having
a tank (1) for storing and decontaminating grey water,
an inlet to tank (1) for introducing used water that is connectable with a source of grey water, and an outlet from tank (1) for reusing water from tank (1), wherein the inlet to tank (1) is connectable to the outlet from a washing machine (6) via a line (13) having a connector that may be connectable thereto and the outlet from tank (1) is connectable to the inlet of the washing machine via a line that may be connected thereto,
which is to be provided in line (8) leading from the drinking water supply to washing machine (6), with a first switching valve (10), which is to be provided in line (9) leading from washing machine (6) to the drain line with a second switching valve (12),
which is to be provided in line (9) leading from washing machine (6) to the drain line and/or on the washing machine (6) with a temperature sensor, with a turbidity sensor for the water pumped from washing machine (6) and/or with a device for measuring the volume of water pumped from tank (1) in washing machine (6) and/or with a device for measuring the volume of water pumped from washing machine (6),
as well as with a control device (14) that conducts the rinse water at least from the last rinsing cycle of washing machine (6) into tank (1) and/or conducts the water at least for the first washing cycle from tank (1) into washing machine (6) which control device (14) may be triggered manually and/or from the control device of the washing machine (6) and/or by a control logic assigned to tank (1).

2. A method for reusing grey water, wherein the water already used in grey water source is fed into a tank (1), in addition the grey water coming from the rinsing cycle of a washing machine (6) is fed into tank (1) and the water in tank (1) is decontaminated and stored, and in which the water needed for a washing cycle of the washing machine (6) is drawn from tank (1) as process water.

3. A method according to Claim 2, wherein the water coming from a washing cycle is fed to the drain line and the water needed for a rinsing cycle is drawn from the drinking water supply.

4. A method according to Claim 2 or 3, wherein to distinguish between rinsing cycle and washing cycle the instantaneous power consumption of washing machine (6) is measured.

5. A method according to one of Claims 2 to 4, wherein to determine the end of a washing cycle the volume of the water pumped from tank (1) into washing machine (6) and the volume of the water pumped from washing machine (6) is measured and compared and/or in which to determine the end of a rinsing cycle the volume of the water drawn from the drinking water supply into washing machine (6) and the volume of the water pumped out of the washing machine is measured and compared.

6. A method according to one of Claims 2 to 5, wherein to determine a washing cycle the temperature of the water is measured and/or the turbidity of the water exiting washing machine (6) is measured.

7. A method according to one of Claims 2 to 6, wherein by drawing the process water from tank (1) and feeding it into washing machine (6) and drawing the grey water from washing machine (6) and feeding it into tank (1) occur independently of one another.

8. A method according to one of Claims 2 to 7, wherein the control device of different inlets and outlets of washing machine (6) is integrated in the control device of tank (1) and/or in the control device of washing machine (6).

9. A method according to one of Claims 2 to 8, wherein switching valves (10, 12) are located upstream and/or downstream of the washing machine (6).

## Revendications

1. Dispositif destiné à la réutilisation d'eau usée, composé
d'un réservoir (1) pour le stockage et l'épuration de l'eau usée,
d'une entrée dans le réservoir (1), raccordable à une source d'eau usée et destinée à l'alimentation du dispositif en eau déjà utilisée,
d'une sortie menant hors du réservoir (1), destinée à la réutilisation de l'eau provenant du réservoir (1),
l'entrée dans le réservoir (1) étant raccordable à la sortie d'un lave-linge (6) à l'aide d'une conduite (13) présentant un raccordement pouvant être effectué et
la sortie menant hors du réservoir (1) étant raccordable à l'entrée du lave-linge à l'aide d'un raccordement de conduite pouvant être effectué,
composé d'une première soupape d'inversion (10) à disposer dans la conduite (8) menant de l'alimentation en eau potable au lave-linge (6),
d'une seconde soupape d'inversion (12) à disposer dans la conduite (9) menant du lave-linge (6) à la canalisation,
d'un capteur de température à disposer dans la conduite (9) menant du lave-linge (6) à la canalisation et/ou sur/dans le lave-linge (6),
d'un capteur de turbidité pour l'eau pompée hors du lave-linge (6) et/ou
d'un débitmètre pour l'eau pompée du réservoir (1) dans le lave-linge (6) et/ou d'un débitmètre pour l'eau pompée hors du lave-linge (6),
ainsi que d'un dispositif de commande (14) qui amène au réservoir (1) l'eau de rinçage au moins du dernier cycle de rinçage du lave-linge (6) et/ou qui amène, du réservoir (1) au lave-linge (6), l'eau destinée au moins au premier cycle de lavage, et qui peut être déclenché manuellement et/ou par l'intermédiaire de la commande du lave-linge (6) et/ou par une logique de commande attribuée à une commande du réservoir (1).

2. Procédé de réutilisation d'eau usée, dans lequel
l'eau déjà utilisée dans une source d'eau usée est amenée dans un réservoir (1),
l'eau usée provenant en plus du cycle de rinçage d'un lave-linge (6) est amenée dans le réservoir (1) et
l'eau est épurée et stockée dans le réservoir (1), et dans lequel
l'eau nécessaire à un cycle de lavage du lave-linge (6) est prélevée du réservoir (1) comme eau sanitaire.

3. Procédé selon la revendication 2, dans lequel l'eau provenant d'un cycle de lavage est amenée à la canalisation et l'eau nécessaire à un cycle de rinçage est prélevée dans l'alimentation en eau potable.

4. Procédé selon la revendication 2 ou 3, dans lequel la consommation de courant momentanée du lave-linge (6) est mesurée dans le but de distinguer le cycle de rinçage du cycle de lavage.

5. Procédé selon l'une quelconque des revendications 2 à 4, dans lequel la quantité d'eau pompée hors du réservoir (1) et amenée dans le lave-linge (6) et la quantité d'eau pompée hors du lave-linge (6) sont mesurées et comparées pour identifier la fin d'un cycle de lavage, et/ou dans lequel la quantité d'eau amenée de l'alimentation en eau potable dans le lave-linge (6) et la quantité d'eau pompée hors du lave-linge sont mesurées et comparées pour identifier la fin d'un cycle de rinçage.

6. Procédé selon l'une quelconque des revendications 2 à 5, dans lequel la température de l'eau et/ou la turbidité de l'eau sortant du lave-linge (6) sont mesurées pour identifier un cycle de lavage.

7. Procédé selon l'une quelconque des revendications 2 à 6, dans lequel l'amenée d'eau sanitaire dans le lave-linge (6) à partir du réservoir (1) et l'amenée d'eau usée dans le réservoir (1) à partir du lave-linge (6) sont réalisées indépendamment l'une de l'autre.

8. Procédé selon l'une quelconque des revendications 2 à 7, dans lequel la commande des différentes entrées et sorties du lave-linge (6) est intégrée à la commande du réservoir (1) et/ou à la commande du lave-linge (6).

9. Procédé selon l'une quelconque des revendications 2 à 8, dans lequel des soupapes d'inversion (10, 12) sont installées en amont et/ou en aval du lave-linge (6).
